# EUROPEAN PATENT SPECIFICATION

(11) **EP 3 832 499 B1**
(45) Date of publication and mention of the grant of the patent: **12.07.2023**
(21) Application number: 21154586.8
(22) Date of filing: 06.04.2016
(51) Int. Cl.: G06F 17/16

(54) **MATRIX COMPUTING DEVICE**
MATRIXBERECHNUNGSVORRICHTUNG
DISPOSITIF DE CALCUL DE MATRICE

(30) Priority: 20.01.2016 CN 201610037535
(43) Date of publication of application: 09.06.2021
(62) Divisional of application: 16885911.4
(73) Proprietor: Cambricon Technologies Corporation Limited, Beijing 100191 (CN)
(72) Inventor: Chen, Yunji, Beijing, 100190 (CN); Zhang, Xiao, Beijing, 100190 (CN); Liu, Shaoli, Beijing, 100190 (CN); Chen, Tianshi, Beijing, 100190 (CN)
(74) Representative: AWA Sweden AB

(56) References cited:
- US-A- 4 888 679
- US-B1- 6 282 634
- CHRISTOPHER H. CHOU ET AL: "VEGAS : soft vector processor with scratchpad memory", PROCEEDINGS OF THE 19TH ACM/SIGDA INTERNATIONAL SYMPOSIUM ON FIELD PROGRAMMABLE GATE ARRAYS, FPGA '11, 27 February 2011 (2011-02-27), page 15, XP055604359, New York, New York, USA DOI: 10.1145/1950413.1950420 ISBN: 978-1-4503-0554-9
- ZHIDUO LIU ET AL: "Accelerator compiler for the VENICE vector processor", PROCEEDINGS OF THE ACM/SIGDA INTERNATIONAL SYMPOSIUM ON FIELD PROGRAMMABLE GATE ARRAYS, FPGA '12, 22 February 2012 (2012-02-22), page 229, XP055604706, New York, New York, USA DOI: 10.1145/2145694.2145732 ISBN: 978-1-4503-1155-7
- AARON SEVERANCE ET AL: "VENICE: A compact vector processor for FPGA applications", FIELD-PROGRAMMABLE TECHNOLOGY (FPT), 2012 INTERNATIONAL CONFERENCE ON, IEEE, 10 December 2012 (2012-12-10), pages 261-268, XP032309717, DOI: 10.1109/FPT.2012.6412146 ISBN: 978-1-4673-2846-3

## Description

### TECHNICAL FIELD

The present disclosure relates to a matrix computing device for executing a matrix operation according to a matrix operation instruction, offering a solution to the problem in the prior art where more and more algorithms involve a large number of matrix operations.

### BACKGROUND

In the current computer field, there are more and more algorithms involving matrix operations. For example, in an artificial neural network algorithm, a plurality of neural network algorithms contain numerous matrix operations. In the neural network, operation expression of an output neuron is y=f (wx+b), wherein w is a matrix, x and b are matrices, and the process of computing the output matrix y is to multiply the matrix w by the matrix x, add the product to the matrix b, and then perform an activation function operation on the obtained matrix (*i.e*. to perform an activation function operation on each element in the matrix). Hence, the matrix operation has become an important issue to be considered at the beginning of designing various computing devices.

In the prior art, one solution to conduct a matrix operation is to use a general-purpose processor, wherein a general-purpose instruction is executed by using a general-purpose register file and a general-purpose functional unit to perform a matrix operation. However, the solution may have the following disadvantages: the operation performance may be low during a matrix operation because a single general-purpose processor is primarily used for a scalar computation, while intercommunication among multiple processors may be a possible performance bottleneck when multiple general-purpose processors are used for parallel operations.

In another prior art, a graphics processing unit (GPU) is used to perform a matrix computation, wherein a general-purpose SIMD instruction is executed by using a general-purpose register file and a general-purpose stream processing unit to perform a matrix operation. However, in the above solution, small on-chip cache of GPU requires constant transportation of off-chip data during a large-scale matrix operation, which makes off-chip bandwidth a main performance bottleneck.

In another prior art, a specialized matrix operation device is used to perform a matrix computation, wherein a customized register file and a customized processing unit are used to perform a matrix operation. However, the current specialized matrix operation device is limited by the register file and is unable to flexibly support matrix operations of different lengths.

To sum up, in the prior art, either the multi-core general processor on chip, or the inter-chip interconnected general processor (single or multi core), or inter-chip interconnected graphics processor is unable to perform an efficient matrix operation. Also, the current solutions, in performing matrix operations, are burdened with excessive codes, limited inter-chip communication, insufficient on-chip cache, and inflexible matrix size. CHRISTOPHER H. CHOU ET AL: "VEGAS : soft vector processor with scratchpad memory",PROCEEDINGS OF THE 19TH ACM/SIGDA INTERNATIONAL SYMPOSIUM ON FIELD PROGRAMMABLE GATE ARRAYS, FPGA '11, 27 February 2011 (2011-02-27), page 15, relates to a vector processor using scratchpad memory for flexible data sizes.

### SUMMARY

### (1) Technical problems to be solved

The present disclosure aims to provide a matrix computing device to solve the problems existing in the prior art, such as constraints imposed by inter-chip communication, insufficient on-chip cache, and inflexible supported matrix length.

### (2) Technical solution

The present invention relates to a matrix operation device and a corresponding method as claimed in the independent claims. Preferred embodiments are defined in the dependent claims.

The present disclosure provides a matrix computing device configured to execute a matrix operation according to a matrix operation instruction. The device includes:
a storage unit configured to store matrices;
a register unit configured to store matrix addresses, where the matrix addresses are addresses in the storage unit where the matrices are stored; and
a matrix operation unit configured to acquire a matrix operation instruction, obtain a matrix address from the register unit according to the matrix operation instruction, and then obtain a corresponding matrix from the storage unit according to the matrix address, subsequently perform a matrix operation according to the matrix acquired so as to obtain a matrix operation result.

### (3) Technical effects

The matrix computing device provided by the present disclosure is able to temporarily store matrix data involved in computation in a scratchpad memory, supporting data of different widths in matrix operations more flexibly and effectively while improving the performance for executing computing tasks that contain a large number of matrices. The instruction adopted by the present disclosure has a simplified format, which makes the instruction set convenient to use and the supported matrix length more flexible.

### BRIEF DESCRIPTION OF THE DRAWINGS

Fig. 1 is a structure diagram of a matrix computing device provided by the present disclosure.
Fig. 2 is a format diagram of an instruction set provided by the present disclosure.
Fig. 3 is a structure diagram of a matrix computing device provided by an embodiment of the present disclosure.
Fig. 4 is a flowchart illustrating a process that a matrix computing device provided by an embodiment of the present disclosure executes a matrix dot product instruction.
Fig. 5 is a flowchart illustrating a process that a matrix computing device provided by an embodiment of the present disclosure performs a power multiplication to calculate an eigenvector corresponding to a maximum eigenvalue of an irreducible matrix.
Fig. 6 is a structure diagram of a matrix operation unit provided by an embodiment of the present disclosure.

### DETAILED DESCRIPTION

The present disclosure provides a matrix computing device including a storage unit, a register unit, and a matrix operation unit. The storage unit is configured to store matrices. The register unit is configured to store matrix storage addresses. The matrix operation unit is configured to acquire a matrix address from the register unit according to a matrix operation instruction, and then acquire a corresponding matrix from the storage unit according to the matrix address, subsequently perform a matrix operation according to the matrix acquired so as to obtain a matrix operation result. The matrix computing device provided by the present disclosure is able to temporarily store matrix data involved in computation in a scratchpad memory, supporting data of different widths in matrix operations more flexibly and effectively while improving the performance for executing computing tasks that contain a large number of matrices.

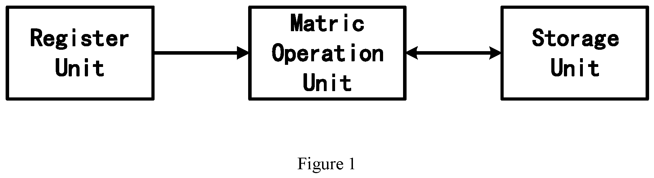

Fig. 1 is a structure diagram of a matrix computing device provided by the present disclosure. As shown in Fig. 1, the matrix computing device includes the following units:
a storage unit configured to store matrices, where in an embodiment, the storage unit can be a scratchpad memory capable of supporting matrix data of different sizes, in the present disclosure, the necessary computational data are temporarily stored in the scratchpad memory to enable the computing device to more flexibly and effectively support data of different widths during matrix operations;
a register unit configured to store matrix addresses, where the matrix addresses are the addresses in the storage unit where the matrices are stored; in an embodiment, the register unit can be a scalar register file providing a scalar register as required during operations, and the scalar register stores matrix addresses as well as scalar data, when matrix and scalar operations are involved, the matrix operation unit is not only configured to acquire a matrix address from the register unit, but also to obtain a corresponding scalar from the register unit; and
a matrix operation unit configured to acquire a matrix operation instruction, obtain a matrix address from said register unit according to the matrix operation instruction, and then obtain a corresponding matrix from the storage unit according to the matrix address, subsequently perform a matrix operation according to the matrix acquired so as to obtain a matrix operation result and store the matrix operation result in the storage unit. The matrix operation unit includes a matrix addition element, a matrix multiplication element, a comparison element, a nonlinear operation element, and a matrix-scalar-multiplication element; furthermore, the matrix operation unit is of the structure of multiple-stage pipeline, where preferably the matrix addition element and the matrix multiplication element are arranged in the first stage of pipeline, the comparison element in the second stage, and the nonlinear operation element and the matrix-scalar-multiplication element in the third stage. Due to the fact that such elements are arranged in different stages of pipeline, when the order of a plurality of matrix operation instructions that are successive and serial is consistent with pipeline order of the corresponding units, the operations as demanded by the series of matrix operation instructions can be more effectively performed. All the matrix operations of the device are performed by the matrix operation unit, including but not limited to matrix addition operation, matrix-add-scalar operation, matrix subtraction operation, matrix-subtract-scalar operation, matrix multiplication operation, matrix-multiply-scalar operation, matrix division (element-wise division) operation, matrix AND operation, and matrix OR operation, and the matrix operation instructions are sent to the operation unit for execution.

According to an embodiment of the present disclosure, the matrix computing device further includes an instruction cache unit configured to store a matrix operation instruction to be executed. While being executed, an instruction is cached in the instruction cache unit as well. When execution of an instruction has been completed, if such instruction is also the earliest one among those instructions in the instruction cache unit that have not been submitted, then it will be submitted; once such instruction is submitted, the status change of the device caused by operation performed by such instruction cannot be cancelled. In an embodiment, the instruction cache unit can be a reorder cache.

According to an embodiment of the present disclosure, the matrix computing device further includes an instruction processing unit configured to acquire a matrix operation instruction from the instruction cache unit and process the matrix operation instruction and provide the same to said matrix operation unit. The instruction processing unit includes:
an instruction fetching module configured to acquire a matrix operation instruction from the instruction cache unit;
a decoding module configured to decode the matrix operation instruction acquired; and
an instruction queue configured to perform a sequential storage for the decoded matrix operation instruction, and, considering the possible dependency relationship between different instructions on the register, cache the decoded instruction, and issue the instruction when the dependency relationship is satisfied.

According to an embodiment of the present disclosure, the matrix computing device further includes a dependency relationship processing unit configured to: before the matrix operation unit acquires the matrix operation instruction, determine whether the matrix operation instruction accesses the same matrix as the previous matrix operation instruction: if the matrix operation instruction does, the matrix operation instruction will be stored in a storage queue, and the matrix operation instruction in the storage queue will then be provided to said matrix operation unit the execution of the previous matrix operation instruction is completed; otherwise, the matrix operation instruction will be directly provided to said matrix operation unit. Specifically, when the matrix operation instruction accesses the scratchpad memory, successive instructions may access the same memory space, and to ensure the correctness of an execution result of the instruction, the present instruction, if detected to have a dependency relationship with data of a previous instruction, must wait within the storage queue until such dependency relationship is eliminated.

According to an embodiment of the present disclosure, the matrix computing device further includes an in-out unit configured to store matrices in the storage unit or acquire a matrix operation result from the storage unit, wherein the in-out unit can directly connect with the storage unit and is configured to read or write matrix data from or in the memory.

According to an embodiment of the present disclosure, a structure of Load/Store is applied to the instruction set used for the present disclosure, and the matrix operation unit will not operate data in the internal storage. The instruction set adopts a simplified instruction set architecture and only provides the most basic vector fundamental-rule operations. Complex vector fundamental-rule operations are simulated by these simple instructions through combination thereof, making it possible to execute instructions in a single cycle at a high clock frequency. In addition, the instruction set also uses fixed-length instructions, so that the vector fundamental-rule operation device provided by the present disclosure fetches a next instruction in a decoding stage of a previous instruction.

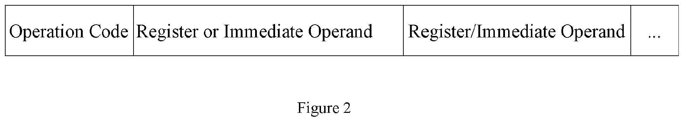

Fig.2 is a format diagram of the instruction set provided by the present disclosure. As shown in Fig. 2, the matrix operation instruction includes an operation code and at least one operation field. The operation code is used for indicating the function of the matrix operation instruction, and the matrix operation unit is to perform different matrix operations by identifying the operation code; and the operation field is used for indicating data information of the matrix operation instruction, where the data information can be an immediate operand or a register number. For example, to acquire a matrix, matrix starting address and matrix length can be obtained from the corresponding register according to a register number, and then the matrix stored in the corresponding address can be obtained from the storage unit according to the matrix starting address and matrix length.

The instruction set includes matrix operation instructions different in functions.

Matrix Multiplying Vector Instruction (MMV). According to the instruction, the device fetches matrix data and vector data with specified size from specified addresses of the scratchpad memory to perform multiplication between the matrix and the vector in the matrix operation unit, and writes the result back into a specified address of the scratchpad memory; it should be noted that a vector can be stored as a matrix of a specific form (with only one row of elements) in the scratchpad memory.

Vector Multiplying Matrix Instruction (VMM). According to the instruction, the device fetches vector data and matrix data with a specified size from specified addresses of the scratchpad memory to perform multiplication between the vector and the matrix in the matrix operation unit, and writes the result back into a specified address of the scratchpad memory; it should be noted that a vector can be stored as a matrix of a specific form (with only one row of elements) in the scratchpad memory.

Matrix Multiplying Scalar Instruction (VMS). According the instruction, the device fetches matrix data of a specified size from a specified address of the scratchpad memory and scalar data of a specified size from a specified address of the scalar register file, multiplies scalar and matrix in the matrix operation unit and writes the result back into a specified address of the scratchpad memory. It should be noted that scalar register file stores both the matrix address and scalar data.
Tensor Operation Instruction (TENS). According to the instruction, the device respectively fetches two blocks of matrix data of a specified size from two specified addresses of the scratchpad memory, performs a tensor operation on the two matrix data in the matrix operation unit, and writes the result back into a specified address of the scratchpad memory;
Matrix Addition Instruction (MA). According to the instruction, the device fetches two blocks of matrix data of two specified size from two specified addresses of the scratchpad memory, performs an addition operation on the two matrices in the matrix operation unit, and writes the result back into a specified address of the scratchpad memory;
Matrix Subtraction Instruction (MS). According to the instruction, the device fetches two blocks of matrix data of a specified size respectively from two specified addresses of the scratchpad memory, performs a subtraction operation on the two matrices in the matrix operation unit, and writes the result back into a specified address of the scratchpad memory;
Matrix Retrieval Instruction (MR). According to the instruction, the device fetches vector data of a specified size from a specified address of the scratchpad memory, and fetches matrix data of a specified size from a specified address of the scratchpad memory, where the vector in matrix operation unit is an index vector, and the i^{th} element in an output vector is the number found in the i^{th} column of the matrix by using the i^{th} element of the index vector as an index, and the output vector is written back into a specified address of the scratchpad memory;
Matrix Load Instruction (ML). According to the instruction, the device loads data of a specified size from a specified external source address to a specified address of the scratchpad memory;
Matrix Storage Instruction (MS). According to the instruction, the device stores matrix data of a specified size from a specified address of the scratchpad memory into an external destination address;
Matrix Movement Instruction (MMOVE). According to the instruction, the device stores matrix data of a specified size from a specified address of the scratchpad memory into another specified address of the scratchpad memory.

More details are provided as follows in reference with embodiments and drawings to facilitate full understanding of technical effects and technical solution of the present disclosure.

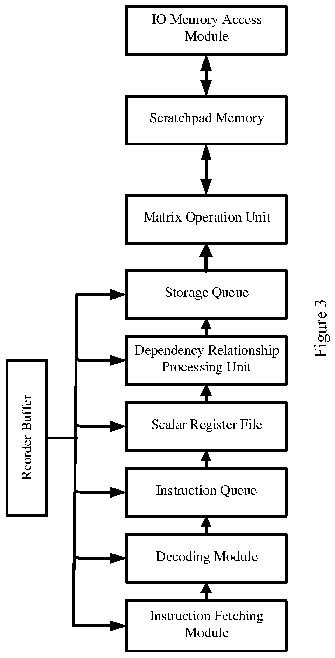

Fig. 3 is a structure diagram of the matrix computing device provided by the embodiments of the present disclosure. As shown in Fig. 3, the device includes an instruction fetching module, a decoding module, an instruction queue, a scalar register file, a dependency relationship processing unit, a storage queue, a reorder buffer, a matrix operation unit, a scratchpad memory, and an IO memory access module.

The instruction fetching module is configured to obtain a next instruction to be executed from the instruction sequence and transmit the instruction to the decoding module.

The decoding module is configured to decode the instruction and transmit the decoded instruction to the instruction queue.

The instruction queue is configured to, considering the possible dependency relationship between different instructions on the scalar register, cache the decoded instruction and then send the instruction when the dependency relationship is satisfied.

The scalar register file is configured to provide the device with scalar register as needed in operations.

The dependency relationship processing unit is configured to process the possible storage dependency relationship between the instruction to be processed and a previous instruction of the instruction to be processed. The matrix operation instruction would access the scratchpad memory, and successive instructions may access the same memory space. To ensure the correctness of an execution result of the instruction, the current instruction, if detected to have a dependency relationship with data of the previous instruction, must wait within the storage queue until such dependency relationship is eliminated.

The storage queue is a module with a sequential queue, where an instruction having a dependency relationship with the previous instruction in terms of data is stored in such queue until the dependency relationship is eliminated.

The reorder buffer is a module where an instruction is cached while the instruction is being executed. When the execution of an instruction has been completed, if such instruction is also the earliest one among those instructions in the reorder buffer that have not been submitted, then it will be submitted; once such instruction is submitted, the status change of the device caused by execution of such instruction cannot be cancelled.

The matrix operation unit is responsible for all the matrix operations of the device, including but not limited to matrix addition operation, matrix-add-scalar operation, matrix subtraction operation, matrix-subtract-scalar operation, matrix multiplication operation, matrix-multiply-scalar operation, matrix division (element-wise division) operation, matrix AND operation, and matrix OR operation, and the matrix operation instructions are sent to the operation unit for execution.

The scratchpad memory is a temporary storage device specialized for matrix data, and capable to support matrix data of different sizes.

An IO memory access module configured to directly access the scratchpad memory, and read or write data from or into the scratchpad memory.

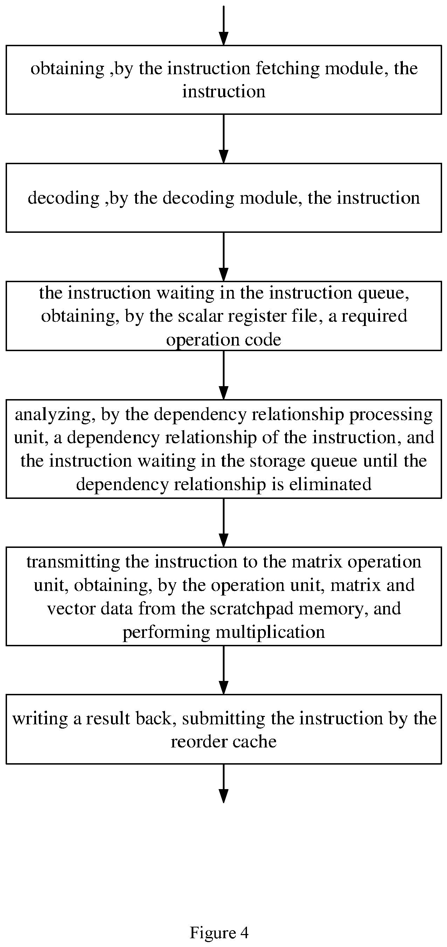

Fig. 4 is a flowchart illustrating a process that the matrix computing device provided by the embodiment of the present disclosure executes a matrix-multiply-vector instruction. As shown in Fig. 4, the process of performing the matrix-multiply-vector instruction includes:
S 1: obtaining, by the instruction fetching module, the matrix-multiply-vector instruction and transmitting the instruction to the decoding module;
S2: decoding the instruction, by the decoding module, and sending the instruction to the instruction queue.
S3: in the instruction queue, the matrix-multiply-vector instruction needs to acquire data in the scalar register corresponding to five operation fields in the instruction from the scalar register file, including input vector address, input vector length, input matrix address, and output vector address, and length.
S4: after acquiring scalar data needed, sending the instruction to the dependency relationship processing unit, analyzing, by the dependency relationship processing unit, whether there is a dependency relationship on data between the instruction and a previous instruction of which the execution has not been completed. The instruction needs to wait in the storage queue until it has no dependency relationship on data with the previous uncompleted instruction.
S5: after the dependency relationship does not exist any longer, transmitting the matrix-multiply-vector instruction to the matrix operation unit, obtaining, by the matrix operation unit, matrix and vector data needed from the scratchpad memory according to address and length of the data needed, subsequently, completing the multiplication in the matrix operation unit.
S6: after completing the operation, writing, by the device, a result back into a specified address of the scratchpad memory, and simultaneously submitting the instruction in the reorder buffer.

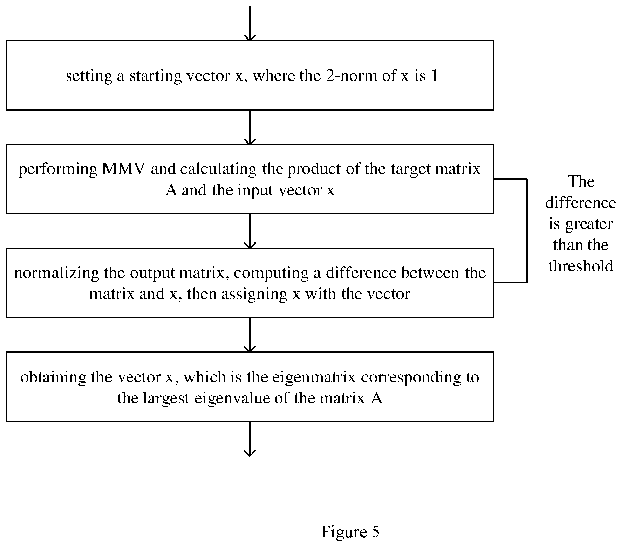

Fig. 5 is a flowchart showing that the matrix computing device provided by the embodiments of the present disclosure performs a power multiplication to calculate an eigenvector corresponding to a maximum eigenvalue of an irreducible matrix. As illustrated in Fig. 5, the process includes:
Step 1: setting a starting vector x with an arbitrary 2-norm being 1;
Step 2: storing the starting vector x and a matrix A to be solved to specified addresses of the specific scratchpad memory for vector and the specific scratchpad memory for matrix in device respectively by means of IO instruction;
Step 3: performing the matrix multiplying vector instruction (MMV), loading A and x from the scratchpad memories and multiplying the matrix A and vector x in matrix operation unit, and performing a normalization operation on the vector obtained and comparing the normalized vector with x, when the difference value is still greater than the threshold value, assigning x with the matrix and returning to Step 2; and
Step 4: the vector obtained being the eigenvector corresponding to the maximum eigenvalue of the irreducible matrix A, storing the output vector to a specific address and then to off-chip address space through an IO instruction.

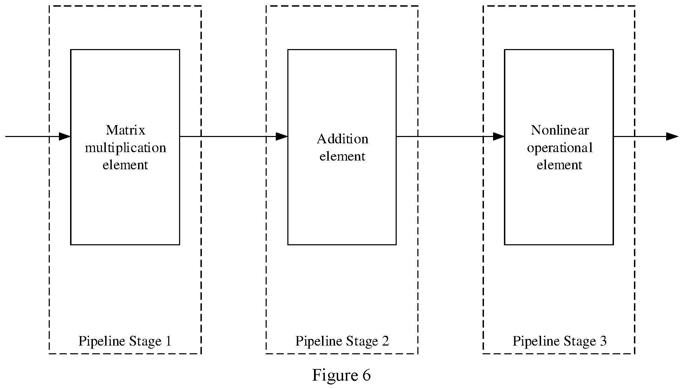

Fig. 6 is a structure diagram of the matrix operation unit provided by the present disclosure. As shown in Fig. 6, the matrix operation unit includes a matrix addition element, a matrix multiplication element, a matrix scalar multiplication element, and a nonlinear operation element. Furthermore, the matrix operation unit is in the structure of multiple-stage pipeline, where the matrix multiplication element and the matrix scalar multiplication element are arranged in pipeline stage 1, the matrix addition element in stage 2, and the nonlinear operation element in stage 3. Due to the fact that such elements are arranged in different stages of pipeline, when the order of a plurality of matrix operation instructions that are successive and serial is consistent with pipeline order of the corresponding units, the operations as demanded by the series of matrix operation instructions can be more effectively performed.

In conclusion, the matrix computing device together with the reduced instruction set architecture provided by the present disclosure offers a solution to the problem in the prior art that more and more algorithms involve a large number of matrix operations. Different from the traditional solutions, the present disclosure features such technical effects as easy to use, supportive in various matrices and sufficient on-chip cache. The present disclosure is useful in many computing tasks involving numerous matrix operations, including the back training and forward prediction in the popular artificial neural network algorithm as well as the traditional numerical computation method of power multiplication for calculating a maximum eigenvalue of an irreducible matrix.

While the present disclosure has been illustrated by reference to specific embodiments, it should be understood that the disclosure is intended not to be limited by the foregoing description, but to be defined to perform the examples thereof. In other words, any modification, equivalent replacement or improvement thereof should all fall into the protection scope of the present disclosure.

## Claims

1. A matrix operation device configured to execute a matrix operation according to a matrix operation instruction, comprising:
a storage unit configured to store matrices, wherein the storage unit is a Scratchpad Memory capable of supporting matrices of different sizes;
a register unit configured to store the matrix addresses, wherein the matrix addresses are addresses in the storage unit where the matrices are stored; and
a matrix operation unit configured to acquire the matrix operation instruction, obtain a matrix address from the register unit according to the matrix operation instruction, and then obtain a corresponding matrix of a specified size from the storage unit according to the matrix address, subsequently perform the matrix operation according to the acquired matrix of the specified size so as to obtain a matrix operation result;
**characterized in that**
said matrix operation instruction comprises an operation code and at least two operation fields, wherein the operation code is used for indicating a function of the matrix operation instruction, and the at least two operation fields are used for indicating data information of the matrix operation instruction;
wherein said data information includes at least two register unit numbers for respectively obtaining a matrix starting address and a matrix size of a first matrix from corresponding register units.

2. The matrix operation device of claim 1, further comprising:
an instruction cache unit configured to store the matrix operation instruction to be executed; and
an instruction processing unit configured to acquire the matrix operation instruction from the instruction cache unit, process the matrix operation instruction, and provide the processed matrix operation instruction to said matrix operation unit.

3. The matrix operation device of claim 2, wherein the instruction processing unit comprises:
an instruction fetching module configured to acquire the matrix operation instruction from the instruction cache unit;
a decoding module configured to decode the acquired matrix operation instruction; and
an instruction queue configured to perform a sequential storage for the decoded matrix operation instruction.

4. The matrix operation device of claim 1, further comprising:
a dependency relationship processing unit configured to: before the matrix operation unit acquires the matrix operation instruction, determine whether the matrix operation instruction accesses a same matrix as a previous matrix operation instruction: if the matrix operation instruction accesses the same matrix as the previous matrix operation instruction, the matrix operation instruction is provided to said matrix operation unit after the execution of the previous matrix operation instruction is completed; if the matrix operation instruction does not access the same matrix as the previous matrix operation instruction, the matrix operation instruction is directly provided to said matrix operation unit.

5. The matrix operation device of claim 4, wherein when the matrix operation instruction accesses the same matrix as the previous matrix operation instruction, said dependency relationship processing unit stores the matrix operation instruction in a storage queue, and provides that matrix operation instruction in the storage queue to said matrix operation unit after the execution of the previous matrix operation instruction is completed.

6. The matrix operation device of claim 1, wherein said storage unit is also configured to store said matrix operation result; and
the device further comprises:
an input-output unit configured to store the matrices in said storage unit or acquire the matrix operation result from said storage unit.

7. The matrix operation device of claim 1, wherein said matrix operation unit comprises a matrix addition element, a matrix multiplication element, a matrix-scalar-multiplication element, and a nonlinear operation element; and said matrix operation unit is of a structure of multiple-stage pipeline, wherein the matrix multiplication element and the matrix-scalar-multiplication element are arranged in a first stage of pipeline, the matrix addition element in a second stage, and the nonlinear operation element in a third stage.

8. The matrix operation device of claim 1 or 4, wherein said matrix operation instruction includes one or more of the following instructions: matrix multiplying vector instruction (MMV), vector multiplying matrix instruction (VMM), matrix multiplying scalar instruction (VMS), tensor operation instruction (TENS), matrix addition instruction (MA), matrix subtraction instruction (MS), matrix retrieval instruction (MR), matrix load instruction (ML), matrix storage instruction (MS), and matrix movement instruction (MMOVE);
according to said matrix multiplying vector instruction (MMV), the device fetches matrix data and vector data with a specified size from specified addresses of said storage unit to perform multiplication between the matrix and the vector, and writes a result back into said storage unit;
according to said vector multiplying matrix instruction (VMM), the device fetches vector data and matrix data with a specified size from specified addresses of said storage unit to perform multiplication between the vector and the matrix, and writes a result back into said storage unit;
according to said matrix multiplying scalar instruction (VMS), the device fetches matrix data of a specified size from a specified address of said storage unit and scalar data of a specified size from a specified address of said register unit, multiplies the scalar and the matrix and writes a result back into said storage unit;
according to said tensor operation instruction (TENS), the device respectively fetches two blocks of matrix data of a specified size from two specified addresses of said storage unit, performs a tensor operation on the two matrix data, and writes a result back into said storage unit;
according to said matrix addition instruction (MA), the device fetches two blocks of matrix data of a specified size respectively from two specified addresses of said storage unit, performs an addition operation on the two matrices, and writes a result back into said storage unit;
according to said matrix subtraction instruction (MS), the device fetches two blocks of matrix data of a specified size respectively from two specified addresses of said storage unit, performs a subtraction operation on the two matrices, and writes a result back into said storage unit;
according to said matrix retrieval instruction (MR), the device fetches vector data of a specified size from a specified address of said storage unit, and fetches matrix data of a specified size from a specified address of said storage unit, wherein the vector is an index vector, and an i^{th} element in an output vector is a number found in an i^{th} column of the matrix by using an i^{th} element of the index vector as an index, and the output vector is written back into said storage unit;
according to said matrix load instruction (ML), the device loads data of a specified size from a specified external source address to a specified address of said storage unit;
according to said matrix storage instruction (MS), the device stores matrix data of a specified size from a specified address of said storage unit into an external destination address; and
according to said matrix movement instruction (MMOVE), the device stores matrix data of a specified size from a specified address of said storage unit into another specified address of said storage unit.

9. A method for executing a matrix operation according to a matrix operation instruction, the method comprising:
storing matrices, by a storage unit, wherein the storage unit is a Scratchpad Memory capable of supporting matrices of different sizes;
storing the matrix addresses, by a register unit, wherein the matrix addresses are addresses in the storage unit where the matrices are stored; and
acquiring the matrix operation instruction, by a matrix operation unit, obtaining a matrix address from the register unit according to the matrix operation instruction, and then obtaining a corresponding matrix of a specified size from the storage unit according to the matrix address, subsequently performing the matrix operation according to the acquired matrix of the specified size so as to obtain a matrix operation result;
**characterized in that**
said matrix operation instruction comprises an operation code and at least two operation fields, wherein the operation code is used for indicating a function of the matrix operation instruction, and the at least two operation fields are used for indicating data information of the matrix operation instruction;
wherein said data information includes at least two register unit numbers for respectively obtaining a matrix starting address and a matrix size of a first matrix from corresponding register units.

10. The method of claim 9, further comprising:
fetching said matrix operation instruction, by an instruction processing unit; and
acquiring the matrix operation instruction from the instruction cache unit and processing the matrix operation instruction, by the instruction processing unit.

11. The method of claim 9 or 10, wherein said matrix operation instruction includes one or more of the following instructions: matrix multiplying vector instruction (MMV), vector multiplying matrix instruction (VMM), matrix multiplying scalar instruction (VMS), tensor operation instruction (TENS), matrix addition instruction (MA), matrix subtraction instruction (MS), matrix retrieval instruction (MR), matrix load instruction (ML), matrix storage instruction (MS), and matrix movement instruction (MMOVE);
according to said matrix multiplying vector instruction (MMV), fetching matrix data and vector data with a specified size from specified addresses of said storage unit to perform multiplication between the matrix and the vector, and writing a result back into said storage unit;
according to said vector multiplying matrix instruction (VMM), fetching vector data and matrix data with a specified size from specified addresses of said storage unit to perform multiplication between the vector and the matrix, and writing a result back into said storage unit;
according to said matrix multiplying scalar instruction (VMS), fetching matrix data of a specified size from a specified address of said storage unit and scalar data of a specified size from a specified address of said register unit, multiplying the scalar and the matrix, and writing a result back into said storage unit;
according to said tensor operation instruction (TENS), respectively fetching two blocks of matrix data of a respective specified size from two specified addresses of said storage unit, performing a tensor operation on the two matrix data, and writing a result back into said storage unit;
according to said matrix addition instruction (MA), fetching two blocks of matrix data of a specified size respectively from two specified addresses of said storage unit, performing an addition operation on the two matrices, and writing a result back into said storage unit;
according to said matrix subtraction instruction (MS), fetching two blocks of matrix data of a specified size respectively from two specified addresses of said storage unit, performing a subtraction operation for the two matrices, and writing a result back into said storage unit;
according to said matrix retrieval instruction (MR), fetching vector data of a specified size from a specified address of said storage unit, and fetching matrix data of a specified size from a specified address of said storage unit, wherein the vector is an index vector, and an i^{th} element in an output vector is a number found in an i^{th} column of the matrix by using an i^{th} element of the index vector as an index, and the output vector is written back into said storage unit;
according to said matrix load instruction (ML), loading data of a specified size from a specified external source address to a specified address of said storage unit;
according to said matrix storage instruction (MS), storing matrix data of a specified size from a specified address of said storage unit into an external destination address; and
according to said matrix movement instruction (MMOVE), storing matrix data of a specified size from a specified address of said storage unit into another specified address of said storage unit.

12. The method of claim 10, wherein acquiring the matrix operation instruction and processing the matrix operation instruction, by said instruction processing unit comprises:
acquiring said matrix operation instruction, by an instruction fetching module;
decoding the acquired matrix operation instruction, by a decoding module; and
performing, by an instruction queue, a sequential storage for the decoded matrix operation instruction.

13. The method according to Claim 10, before acquiring said matrix operation instruction, the method further comprising:
determining whether said matrix operation instruction accesses a same matrix as a previous matrix operation instruction: if said matrix operation instruction accesses the same matrix as the previous matrix operation instruction, said matrix operation instruction is provided to said matrix operation unit after the execution of the previous matrix operation instruction is completed; if said matrix operation instruction does not access the same matrix as the previous matrix operation instruction, said matrix operation instruction is directly provided to said matrix operation unit.

14. The method of claim 13, wherein when said matrix operation instruction accesses the same matrix as the previous matrix operation instruction, the method comprises: storing said matrix operation instruction in a storage queue, and that matrix operation instruction in the storage queue is provided to said matrix operation unit after the execution of the previous matrix operation instruction is completed.

## Patentansprüche

1. Matrixoperationsvorrichtung, die dafür konfiguriert ist, eine Matrixoperation gemäß einer Matrixoperationsinstruktion auszuführen, und die umfasst:
eine Speichereinheit, die zum Speichern von Matrizen konfiguriert ist, wobei die Speichereinheit ein Scratchpad-Speicher ist, der Matrizen unterschiedlicher Größe unterstützen kann;
eine Registereinheit, die zum Speichern von Matrixadressen konfiguriert ist, wobei die Matrixadressen Adressen in der Speichereinheit sind, wo die Matrices gespeichert sind; und
eine Matrixoperationseinheit, die dafür konfiguriert ist, die Matrixoperationsinstruktion zu erfassen, eine Matrixadresse von der Registereinheit gemäß der Matrixoperationsinstruktion zu erhalten, und dann eine entsprechende Matrix einer spezifizierten Größe von der Speichereinheit gemäß der Matrixadresse zu erhalten, und anschließend die Matrixoperation gemäß der erfassten Matrix der spezifizierten Größe durchzuführen, um ein Matrixoperationsergebnis zu erhalten;
**dadurch gekennzeichnet, dass**
die Matrixoperationsinstruktion einen Operationscode und mindestens zwei Operationsfelder umfasst, wobei der Operationscode zum Angeben einer Funktion der Matrixoperationsinstruktion verwendet wird und die mindestens zwei Operationsfelder zum Angeben von Dateninformationen der Matrixoperationsinstruktion verwendet werden;
wobei die Dateninformationen mindestens zwei Registereinheitsnummern enthalten, um jeweils eine Matrixstartadresse und eine Matrixgröße einer ersten Matrix aus entsprechenden Registereinheiten zu erhalten.

2. Matrixoperationsvorrichtung nach Anspruch 1, die des Weiteren umfasst:
eine Instruktions-Cache-Einheit, die dafür konfiguriert ist, die auszuführende Matrixoperationsinstruktion zu speichern; und
eine Instruktionsverarbeitungseinheit, die dafür konfiguriert ist, die Matrixoperationsinstruktion von der Instruktions-Cache-Einheit zu erfassen, die Matrixoperationsinstruktion zu verarbeiten, und die verarbeitete Matrixoperationsinstruktion an die Matrixoperationseinheit zu übermitteln.

3. Matrixoperationsvorrichtung nach Anspruch 2, wobei die Instruktionsverarbeitungseinheit umfasst:
ein Instruktionsholmodul, das dafür konfiguriert ist, die Matrixoperationsinstruktion aus der Instruktions-Cache-Einheit zu erfassen;
ein Decodiermodul, das dafür konfiguriert ist, die erfasste Matrixoperationsinstruktion zu decodieren; und
eine Instruktionswarteschlange, die dafür konfiguriert ist, eine sequentielle Speicherung für die decodierte Matrixoperationsinstruktion durchzuführen.

4. Matrixoperationsvorrichtung nach Anspruch 1, die des Weiteren umfasst:
eine Abhängigkeitsbeziehungsverarbeitungseinheit, die dafür konfiguriert ist: bevor die Matrixoperationseinheit die Matrixoperationsinstruktion erfasst, zu bestimmen, ob die Matrixoperationsinstruktion auf dieselbe Matrix zugreift wie eine vorherige Matrixoperationsinstruktion; wenn die Matrixoperationsinstruktion auf dieselbe Matrix zugreift wie die vorherige Matrixoperationsinstruktion, so wird die Matrixoperationsinstruktion an die Matrixoperationseinheit übermittelt, nachdem die Ausführung der vorherigen Matrixoperationsinstruktion abgeschlossen ist; wenn die Matrixoperationsinstruktion nicht auf dieselbe Matrix zugreift wie die vorherige Matrixoperationsinstruktion, so wird die Matrixoperationsinstruktion direkt an die Matrixoperationseinheit übermittelt.

5. Matrixoperationsvorrichtung nach Anspruch 4, wobei, wenn die Matrixoperationsinstruktion auf dieselbe Matrix zugreift wie die vorherige Matrixoperationsinstruktion, die Abhängigkeitsbeziehungsverarbeitungseinheit die Matrixoperationsinstruktion in einer Speicherwarteschlange speichert und diese Matrixoperationsinstruktion in der Speicherwarteschlange an die Matrixoperationseinheit übermittelt, nachdem die Ausführung der vorherigen Matrixoperationsinstruktion abgeschlossen ist.

6. Matrixoperationsvorrichtung nach Anspruch 1, wobei die Speichereinheit außerdem zum Speichern des Matrixoperationsergebnisses konfiguriert ist; und
die Vorrichtung des Weiteren umfasst:
eine Eingabe-Ausgabe-Einheit, die dafür konfiguriert ist, die Matrices in der Speichereinheit zu speichern oder das Matrixoperationsergebnis von der Speichereinheit zu erfassen.

7. Matrixoperationsvorrichtung nach Anspruch 1, wobei die Matrixoperationseinheit ein Matrixadditionselement, ein Matrixmultiplikationselement, ein Matrix-Skalar-Multiplikationselement und ein Nichtlinear-Operationselement umfasst; und die Matrixoperationseinheit eine Struktur einer mehrstufigen Pipeline aufweist, wobei das Matrixmultiplikationselement und das Matrix-Skalar-Multiplikationselement in einer ersten Stufe der Pipeline angeordnet sind, das Matrixadditionselement in einer zweiten Stufe angeordnet ist, und das Nichtlinear-Operationselement in einer dritten Stufe angeordnet ist.

8. Matrixoperationsvorrichtung nach Anspruch 1 oder 4, wobei die Matrixoperationsinstruktion eine oder mehrere der folgenden Instruktionen enthält: Matrixmultiplizierungsvektorinstruktion (MMV), Vektormultiplizierungsmatrixinstruktion (VMM), Matrixmultiplizierungsskalarinstruktion (VMS), Tensoroperationsinstruktion (TENS), Matrixadditionsinstruktion (MA), Matrixsubtraktionsinstruktion (MS), Matrixabrufinstruktion (MR), Matrixladeinstruktion (ML), Matrixspeicherinstruktion (MS), und Matrixbewegungsinstruktion (MMOVE);
gemäß der Matrixmultiplizierungsvektorinstruktion (MMV) holt die Vorrichtung Matrixdaten und Vektordaten mit einer spezifizierten Größe von spezifizierten Adressen der Speichereinheit, um eine Multiplikation zwischen der Matrix und dem Vektor durchzuführen, und schreibt ein Ergebnis in die Speichereinheit zurück;
gemäß der Vektormultiplizierungsmatrixinstruktion (VMM) holt die Vorrichtung Vektordaten und Matrixdaten mit einer spezifizierten Größe von spezifizierten Adressen der Speichereinheit, um eine Multiplikation zwischen dem Vektor und der Matrix durchzuführen, und schreibt ein Ergebnis in die Speichereinheit zurück;
gemäß der Matrixmultiplizierungsskalarinstruktion (VMS) holt die Vorrichtung Matrixdaten einer spezifizierten Größe von einer spezifizierten Adresse der Speichereinheit und Skalardaten einer spezifizierten Größe von einer spezifizierten Adresse der Registereinheit, multipliziert den Skalar und die Matrix, und schreibt ein Ergebnis in die Speichereinheit zurück;
gemäß der Tensoroperationsinstruktion (TENS) holt die Vorrichtung jeweils zwei Blöcke von Matrixdaten einer spezifizierten Größe von zwei spezifizierten Adressen der Speichereinheit, führt eine Tensoroperation an den beiden Matrixdaten durch, und schreibt ein Ergebnis in die Speichereinheit zurück;
gemäß der Matrixadditionsinstruktion (MA) holt die Vorrichtung jeweils zwei Blöcke von Matrixdaten einer spezifizierten Größe von zwei spezifizierten Adressen der Speichereinheit, führt eine Additionsoperation an den beiden Matrices durch, und schreibt ein Ergebnis in die Speichereinheit zurück;
gemäß der Matrixsubtraktionsinstruktion (MS) holt die Vorrichtung jeweils zwei Blöcke von Matrixdaten einer spezifizierten Größe von zwei spezifizierten Adressen der Speichereinheit, führt eine Subtraktionsoperation an den beiden Matrices durch, und schreibt ein Ergebnis in die Speichereinheit zurück;
gemäß der Matrixabrufinstruktion (MR) holt die Vorrichtung Vektordaten einer spezifizierten Größe von einer spezifizierten Adresse der Speichereinheit und holt Matrixdaten einer spezifizierten Größe von einer spezifizierten Adresse der Speichereinheit, wobei der Vektor ein Indexvektor ist und ein i-tes Element in einem Ausgabevektor eine Zahl ist, die in einer i-ten Spalte der Matrix unter Verwendung eines i-ten Elements des Indexvektors als ein Index gefunden wird, und der Ausgabevektor wird in die Speichereinheit zurück geschrieben;
gemäß der Matrixladeinstruktion (ML) lädt die Vorrichtung Daten einer spezifizierten Größe von einer spezifizierten externen Quelladresse zu einer spezifizierten Adresse der Speichereinheit;
gemäß der Matrixspeicherinstruktion (MS) speichert die Vorrichtung Matrixdaten einer spezifizierten Größe von einer spezifizierten Adresse der Speichereinheit in eine externe Zieladresse; und
gemäß der Matrixbewegungsinstruktion (MMOVE) speichert die Vorrichtung Matrixdaten einer spezifizierten Größe von einer spezifizierten Adresse der Speichereinheit in eine andere spezifizierte Adresse der Speichereinheit.

9. Verfahren zum Ausführen einer Matrixoperation gemäß einer Matrixoperationsinstruktion, wobei das Verfahren umfasst:
Speichern von Matrices durch eine Speichereinheit, wobei die Speichereinheit ein Scratchpad-Speicher ist, der Matrices unterschiedlicher Größe unterstützen kann;
Speichern der Matrixadressen durch eine Registereinheit, wobei die Matrixadressen Adressen in der Speichereinheit sind, in der die Matrices gespeichert werden; und
Erfassen der Matrixoperationsinstruktion durch eine Matrixoperationseinheit, Erhalten einer Matrixadresse von der Registereinheit gemäß der Matrixoperationsinstruktion, und dann Erhalten einer entsprechenden Matrix einer spezifizierten Größe von der Speichereinheit gemäß der Matrixadresse, und anschließendes Durchführen der Matrixoperation gemäß der erfassten Matrix der spezifizierten Größe, um ein Matrixoperationsergebnis zu erhalten;
**dadurch gekennzeichnet, dass**
die Matrixoperationsinstruktion einen Operationscode und mindestens zwei Operationsfelder umfasst, wobei der Operationscode zum Angeben einer Funktion der Matrixoperationsinstruktion verwendet wird und die mindestens zwei Operationsfelder zum Angeben von Dateninformationen der Matrixoperationsinstruktion verwendet werden;
wobei die Dateninformationen mindestens zwei Registereinheitsnummern enthalten, um jeweils eine Matrixstartadresse und eine Matrixgröße einer ersten Matrix aus entsprechenden Registereinheiten zu erhalten.

10. Verfahren nach Anspruch 9, das des Weiteren umfasst:
Holen der Matrixoperationsinstruktion durch eine Instruktionsverarbeitungseinheit; und
Erfassen der Matrixoperationsinstruktion von der Instruktions-Cache-Einheit und Verarbeiten der Matrixoperationsinstruktion durch die Instruktionsverarbeitungseinheit.

11. Verfahren nach Anspruch 9 oder 10, wobei die Matrixoperationsinstruktion eine oder mehrere der folgenden Instruktionen enthält: Matrixmultiplizierungsvektorinstruktion (MMV), Vektormultiplizierungsmatrixinstruktion (VMM), Matrixmultiplizierungsskalarinstruktion (VMS), Tensoroperationsinstruktion (TENS), Matrixadditionsinstruktion (MA), Matrixsubtraktionsinstruktion (MS), Matrixabrufinstruktion (MR), Matrixladeinstruktion (ML), Matrixspeicherinstruktion (MS), und Matrixbewegungsinstruktion (MMOVE);
gemäß der Matrixmultiplizierungsvektorinstruktion (MMV), Holen von Matrixdaten und Vektordaten mit einer spezifizierten Größe von spezifizierten Adressen der Speichereinheit, um eine Multiplikation zwischen der Matrix und dem Vektor durchzuführen, und Zurückschreiben eines Ergebnisses in die Speichereinheit;
gemäß der Vektormultiplizierungsmatrixinstruktion (VMM), Holen von Vektordaten und Matrixdaten mit einer spezifizierten Größe von spezifizierten Adressen der Speichereinheit, um eine Multiplikation zwischen dem Vektor und der Matrix durchzuführen, und Zurückschreiben eines Ergebnisses in die Speichereinheit;
gemäß der Matrixmultiplizierungsskalarinstruktion (VMS), Holen von Matrixdaten einer spezifizierten Größe von einer spezifizierten Adresse der Speichereinheit und Skalardaten einer spezifizierten Größe von einer spezifizierten Adresse der Registereinheit, Multiplizieren des Skalars und der Matrix, und Zurückschreiben eines Ergebnisses in die Speichereinheit;
gemäß der Tensoroperationsinstruktion (TENS), jeweiliges Holen zweier Blöcke von Matrixdaten einer jeweiligen spezifizierten Größe von zwei spezifizierten Adressen der Speichereinheit, Durchführen einer Tensoroperation an den beiden Matrixdaten, und Zurückschreiben eines Ergebnisses in die Speichereinheit;
gemäß der Matrixadditionsinstruktion (MA), jeweiliges Holen zweier Blöcke von Matrixdaten einer spezifizierten Größe von zwei spezifizierten Adressen der Speichereinheit, Durchführen einer Additionsoperation an den beiden Matrices, und Zurückschreiben eines Ergebnisses in die Speichereinheit;
gemäß der Matrixsubtraktionsinstruktion (MS), jeweiliges Holen zweier Blöcke von Matrixdaten einer spezifizierten Größe von zwei spezifizierten Adressen der Speichereinheit, Durchführen einer Subtraktionsoperation für die beiden Matrices, und Zurückschreiben eines Ergebnisses in die Speichereinheit;
gemäß der Matrixabrufinstruktion (MR), Holen von Vektordaten einer spezifizierten Größe von einer spezifizierten Adresse der Speichereinheit, und Holen von Matrixdaten einer spezifizierten Größe von einer spezifizierten Adresse der Speichereinheit, wobei der Vektor ein Indexvektor ist und ein i-tes Element in einem Ausgabevektor eine Zahl ist, die in einer i-ten Spalte der Matrix unter Verwendung eines i-ten Elements des Indexvektors als ein Index gefunden wird, und Zurückschreiben des Ausgabevektors in die Speichereinheit;
gemäß der Matrixladeinstruktion (ML), Laden von Daten einer spezifizierten Größe von einer spezifizierten externen Quelladresse zu einer spezifizierten Adresse der Speichereinheit;
gemäß der Matrixspeicherinstruktion (MS), Speichern von Matrixdaten einer spezifizierten Größe von einer spezifizierten Adresse der Speichereinheit in eine externe Zieladresse; und
gemäß der Matrixbewegungsinstruktion (MMOVE), Speichern von Matrixdaten einer spezifizierten Größe von einer spezifizierten Adresse der Speichereinheit in eine andere spezifizierte Adresse der Speichereinheit.

12. Verfahren nach Anspruch 10, wobei das Erfassen der Matrixoperationsinstruktion und das Verarbeiten der Matrixoperationsinstruktion durch die Instruktionsverarbeitungseinheit umfasst:
Erfassen der Matrixoperationsinstruktion durch ein Instruktionsholmodul;
Decodieren der erfassten Matrixoperationsinstruktion durch ein Decodiermodul; und
Durchführen, durch eine Instruktionswarteschlange, einer sequentiellen Speicherung für die decodierte Matrixoperationsinstruktion.

13. Verfahren nach Anspruch 10, wobei das Verfahren vor dem Erfassen der Matrixoperationsinstruktion des Weiteren umfasst:
Bestimmen, ob die Matrixoperationsinstruktion auf eine selbe Matrix zugreift wie eine vorherige Matrixoperationsinstruktion; wenn die Matrixoperationsinstruktion auf dieselbe Matrix zugreift wie die vorherige Matrixoperationsinstruktion, so wird die Matrixoperationsinstruktion an die Matrixoperationseinheit übermittelt, nachdem die Ausführung der vorherigen Matrixoperationsinstruktion abgeschlossen ist; wenn die Matrixoperationsinstruktion nicht auf dieselbe Matrix zugreift wie die vorherige Matrixoperationsinstruktion, so wird die Matrixoperationsinstruktion direkt an die Matrixoperationseinheit übermittelt.

14. Verfahren nach Anspruch 13, wobei, wenn die Matrixoperationsinstruktion auf dieselbe Matrix zugreift wie die vorherige Matrixoperationsinstruktion, das Verfahren umfasst: Speichern der Matrixoperationsinstruktion in einer Speicherwarteschlange, und diese Matrixoperationsinstruktion in der Speicherwarteschlange wird an die Matrixoperationseinheit übermittelt, nachdem die Ausführung der vorherigen Matrixoperationsinstruktion abgeschlossen ist.

## Revendications

1. Dispositif d'opération de matrice configuré pour exécuter une opération de matrice selon une instruction d'opération de matrice, comprenant :
une unité de stockage configurée pour stocker des matrices, dans lequel l'unité de stockage est une mémoire de travail capable de prendre en charge des matrices de tailles différentes ;
une unité de registre configurée pour stocker les adresses de matrices, dans lequel les adresses de matrices sont des adresses dans l'unité de stockage où les matrices sont stockées ; et
une unité d'opération de matrice configurée pour acquérir l'instruction d'opération de matrice, obtenir une adresse de matrice depuis l'unité de registre selon l'instruction d'opération de matrice, puis obtenir une matrice correspondante d'une taille spécifiée depuis l'unité de stockage selon l'adresse de matrice, puis réaliser l'opération de matrice selon la matrice acquise de la taille spécifiée afin d'obtenir un résultat d'opération de matrice ;
**caractérisé en ce que**
ladite instruction d'opération de matrice comprend un code d'opération et au moins deux champs d'opération, dans lequel le code d'opération est utilisé pour indiquer une fonction de l'instruction d'opération de matrice, et les au moins deux champs d'opération sont utilisés pour indiquer des informations de données de l'instruction d'opération de matrice ;
dans lequel lesdites informations de données incluent au moins deux numéros d'unité de registre pour obtenir respectivement une adresse de début de matrice et une taille de matrice d'une première matrice depuis des unités de registre correspondantes.

2. Dispositif d'opération de matrice selon la revendication 1, comprenant en outre :
une unité de mémoire cache d'instruction configurée pour stocker l'instruction d'opération de matrice à exécuter ; et
une unité de traitement d'instruction configurée pour acquérir l'instruction d'opération de matrice depuis l'unité de mémoire cache d'instruction, traiter l'instruction d'opération de matrice, et fournir l'instruction d'opération de matrice traitée à ladite unité d'opération de matrice.

3. Dispositif d'opération de matrice selon la revendication 2, dans lequel l'unité de traitement d'instruction comprend :
un module de récupération d'instruction configuré pour acquérir l'instruction d'opération de matrice depuis l'unité de mémoire cache d'instruction ;
un module de décodage configuré pour décoder l'instruction d'opération de matrice acquise ; et
une file d'attente d'instruction configurée pour réaliser un stockage séquentiel pour l'instruction d'opération de matrice décodée.

4. Dispositif d'opération de matrice selon la revendication 1, comprenant en outre :
une unité de traitement de relation de dépendance configurée pour : avant que l'unité d'opération de matrice n'acquière l'instruction d'opération de matrice, déterminer si l'instruction d'opération de matrice accède ou non à une même matrice qu'une instruction d'opération de matrice précédente : si l'instruction d'opération de matrice accède à la même matrice que l'instruction d'opération de matrice précédente, l'instruction d'opération de matrice est fournie à ladite unité d'opération de matrice après que l'exécution de l'instruction d'opération de matrice précédente est terminée ; si l'instruction d'opération de matrice n'accède pas à la même matrice que l'instruction d'opération de matrice précédente, l'instruction d'opération de matrice est directement fournie à ladite unité d'opération de matrice.

5. Dispositif d'opération de matrice selon la revendication 4, dans lequel, lorsque l'instruction d'opération de matrice accède à la même matrice que l'instruction d'opération de matrice précédente, ladite unité de traitement de relation de dépendance stocke l'instruction d'opération de matrice dans une file d'attente de stockage, et fournit cette instruction d'opération de matrice dans la file d'attente de stockage à ladite unité d'opération de matrice après que l'exécution de l'instruction d'opération de matrice précédente est terminée.

6. Dispositif d'opération de matrice selon la revendication 1, dans lequel ladite unité de stockage est également configurée pour stocker ledit résultat d'opération de matrice ; et
le dispositif comprend en outre :
une unité d'entrée-sortie configurée pour stocker les matrices dans ladite unité de stockage ou acquérir le résultat d'opération de matrice depuis ladite unité de stockage.

7. Dispositif d'opération de matrice selon la revendication 1, dans lequel ladite unité d'opération de matrice comprend un élément d'addition de matrices, un élément de multiplication de matrices, un élément de multiplication de matrice par scalaire et un élément d'opération non linéaire ; et ladite unité d'opération de matrice est d'une structure de pipeline à plusieurs étages, dans lequel l'élément de multiplication de matrices et l'élément de multiplication de matrice par scalaire sont agencés dans un premier étage de pipeline, l'élément d'addition de matrices est agencée dans un deuxième étage, et l'élément d'opération non linéaire est agencé dans un troisième étage.

8. Dispositif d'opération de matrice selon la revendication 1 ou 4, dans lequel ladite instruction d'opération de matrice inclut une ou plusieurs des instructions suivantes : une instruction de multiplication de matrice par vecteur (MMV), une instruction de multiplication de vecteur par matrice (VMM), une instruction de multiplication de matrice par scalaire (VMS), une instruction d'opération de tenseur (TENS), une instruction d'addition de matrices (MA), une instruction de soustraction de matrices (MS), une instruction d'extraction de matrice (MR), une instruction de charge de matrice (ML), une instruction de stockage de matrice (MS), et une instruction de déplacement de matrice (MMOVE) ;
selon ladite instruction de multiplication de matrice par vecteur (MMV), le dispositif récupère des données de matrice et des données de vecteur d'une taille spécifiée depuis des adresses spécifiées de ladite unité de stockage pour réaliser une multiplication entre la matrice et le vecteur, et écrit un résultat dans ladite unité de stockage ;
selon ladite instruction de multiplication de vecteur par matrice (VMM), le dispositif récupère des données de vecteur et des données de matrice d'une taille spécifiée depuis des adresses spécifiées de ladite unité de stockage pour réaliser une multiplication entre le vecteur et la matrice, et écrit un résultat dans ladite unité de stockage ;
selon ladite instruction de multiplication de matrice par scalaire (VMS), le dispositif récupère des données de matrice d'une taille spécifiée depuis une adresse spécifiée de ladite unité de stockage et des données de scalaire d'une taille spécifiée depuis une adresse spécifiée de ladite unité de registre, multiplie le scalaire et la matrice, et écrit un résultat dans ladite unité de stockage ;
selon ladite instruction d'opération de tenseur (TENS), le dispositif respectivement récupère deux blocs de données de matrice d'une taille spécifiée depuis deux adresses spécifiées de ladite unité de stockage, réalise une opération de tenseur sur les deux données de matrice, et écrit un résultat dans ladite unité de stockage ;
selon ladite instruction d'addition de matrices (MA), le dispositif récupère deux blocs de données de matrice d'une taille spécifiée respectivement depuis deux adresses spécifiées de ladite unité de stockage, réalise une opération d'addition sur les deux matrices, et écrit un résultat dans ladite unité de stockage ;
selon ladite instruction de soustraction de matrices (MS), le dispositif récupère deux blocs de données de matrice d'une taille spécifiée respectivement depuis deux adresses spécifiées de ladite unité de stockage, réalise une opération de soustraction pour les deux matrices, et écrit un résultat dans ladite unité de stockage ;
selon ladite instruction d'extraction de matrice (MR), le dispositif récupère des données de vecteur d'une taille spécifiée depuis une adresse spécifiée de ladite unité de stockage, et récupère des données de matrice d'une taille spécifiée depuis une adresse spécifiée de ladite unité de stockage, dans lequel le vecteur est un vecteur d'indice, et un i^{ème} élément dans un vecteur de sortie est un nombre trouvé dans une i^{ème} colonne de la matrice en utilisant un i^{ème} élément du vecteur d'indice en tant qu'un indice, et le vecteur de sortie est écrit dans ladite unité de stockage ;
selon ladite instruction de charge de matrice (ML), le dispositif charge des données d'une taille spécifiée depuis une adresse de source externe spécifiée à une adresse spécifiée de ladite unité de stockage ;
selon ladite instruction de stockage de matrice (MS), le dispositif stocke des données de matrice d'une taille spécifiée depuis une adresse spécifiée de ladite unité de stockage à une adresse de destination externe ; et
selon ladite instruction de déplacement de matrice (MMOVE), le dispositif stocke des données de matrice d'une taille spécifiée depuis une adresse spécifiée de ladite unité de stockage à une autre adresse spécifiée de ladite unité de stockage.

9. Procédé d'exécution d'une opération de matrice selon une instruction d'opération de matrice, le procédé comprenant
le stockage de matrices, par une unité de stockage, dans lequel l'unité de stockage est une mémoire de travail capable de prendre en charge des matrices de tailles différentes ;
le stockage des adresses de matrices, par une unité de registre, dans lequel les adresses de matrices sont des adresses dans l'unité de stockage où les matrices sont stockées ; et
l'acquisition de l'instruction d'opération de matrice, par une unité d'opération de matrice, l'obtention d'une adresse de matrice depuis l'unité de registre selon l'instruction d'opération de matrice, puis l'obtention d'une matrice correspondante d'une taille spécifiée depuis l'unité de stockage selon l'adresse de matrice, puis la réalisation de l'opération de matrice selon la matrice acquise de la taille spécifiée afin d'obtenir un résultat d'opération de matrice ;
**caractérisé en ce que**
ladite instruction d'opération de matrice comprend un code d'opération et au moins deux champs d'opération, dans lequel le code d'opération est utilisé pour indiquer une fonction de l'instruction d'opération de matrice, et les au moins deux champs d'opération sont utilisés pour indiquer des informations de données de l'instruction d'opération de matrice ;
dans lequel lesdites informations de données incluent au moins deux numéros d'unité de registre pour obtenir respectivement une adresse de début de matrice et une taille de matrice d'une première matrice depuis des unités de registre correspondantes.

10. Procédé selon la revendication 9, comprenant en outre :
la récupération de ladite instruction d'opération de matrice, par une unité de traitement d'instruction ; et
l'acquisition de l'instruction d'opération de matrice depuis l'unité de mémoire cache d'instruction et le traitement de l'instruction d'opération de matrice, par l'unité de traitement d'instruction.

11. Procédé selon la revendication 9 ou 10, dans lequel ladite instruction d'opération de matrice inclut une ou plusieurs des instructions suivantes : une instruction de multiplication de matrice par vecteur (MMV), une instruction de multiplication de vecteur par matrice (VMM), une instruction de multiplication de matrice par scalaire (VMS), une instruction d'opération de tenseur (TENS), une instruction d'addition de matrices (MA), une instruction de soustraction de matrices (MS), une instruction d'extraction de matrice (MR), une instruction de charge de matrice (ML), une instruction de stockage de matrice (MS), et une instruction de déplacement de matrice (MMOVE) ;
selon ladite instruction de multiplication de matrice par vecteur (MMV), la récupération de données de matrice et de données de vecteur d'une taille spécifiée depuis des adresses spécifiées de ladite unité de stockage pour réaliser une multiplication entre la matrice et le vecteur, et l'écriture d'un résultat dans ladite unité de stockage ;
selon ladite instruction de multiplication de vecteur par matrice (VMM), la récupération de données de vecteur et de données de matrice d'une taille spécifiée depuis des adresses spécifiées de ladite unité de stockage pour réaliser une multiplication entre le vecteur et la matrice, et l'écriture d'un résultat dans ladite unité de stockage ;
selon ladite instruction de multiplication de matrice par scalaire (VMS), la récupération de données de matrice d'une taille spécifiée depuis une adresse spécifiée de ladite unité de stockage et de données de scalaire d'une taille spécifiée depuis une adresse spécifiée de ladite unité de registre, la multiplication du scalaire et de la matrice, et l'écriture d'un résultat dans ladite unité de stockage ;
selon ladite instruction d'opération de tenseur (TENS), respectivement la récupération de deux blocs de données de matrice d'une taille spécifiée respective depuis deux adresses spécifiées de ladite unité de stockage, la réalisation d'une opération de tenseur sur les deux données de matrice, et l'écriture d'un résultat dans ladite unité de stockage ;
selon ladite instruction d'addition de matrices (MA), la récupération de deux blocs de données de matrice d'une taille spécifiée respectivement depuis deux adresses spécifiées de ladite unité de stockage, la réalisation d'une opération d'addition sur les deux matrices, et l'écriture d'un résultat dans ladite unité de stockage ;
selon ladite instruction de soustraction de matrices (MS), la récupération de deux blocs de données de matrice d'une taille spécifiée respectivement depuis deux adresses spécifiées de ladite unité de stockage, la réalisation d'une opération de soustraction pour les deux matrices, et l'écriture d'un résultat dans ladite unité de stockage ;
selon ladite instruction d'extraction de matrice (MR), la récupération de données de vecteur d'une taille spécifiée depuis une adresse spécifiée de ladite unité de stockage, et la récupération de données de matrice d'une taille spécifiée depuis une adresse spécifiée de ladite unité de stockage, dans lequel le vecteur est un vecteur d'indice, et un i^{ème} élément dans un vecteur de sortie est un nombre trouvé dans une i^{ème} colonne de la matrice en utilisant un i^{ème} élément du vecteur d'indice en tant qu'un indice, et le vecteur de sortie est écrit dans ladite unité de stockage ;
selon ladite instruction de charge de matrice (ML), le chargement de données d'une taille spécifiée depuis une adresse de source externe spécifiée à une adresse spécifiée de ladite unité de stockage ;
selon ladite instruction de stockage de matrice (MS), le stockage de données de matrice d'une taille spécifiée depuis une adresse spécifiée de ladite unité de stockage à une adresse de destination externe ; et
selon ladite instruction de déplacement de matrice (MMOVE), le stockage de données de matrice d'une taille spécifiée depuis une adresse spécifiée de ladite unité de stockage à une autre adresse spécifiée de ladite unité de stockage.

12. Procédé selon la revendication 10, dans lequel l'acquisition de l'instruction d'opération de matrice et le traitement de l'instruction d'opération de matrice, par ladite unité de traitement d'instruction, comprennent :
l'acquisition de ladite instruction d'opération de matrice, par un module de récupération d'instruction ;
le décodage de l'instruction d'opération de matrice acquise, par un module de décodage ; et
la réalisation, par une file d'attente d'instruction, d'un stockage séquentiel pour l'instruction d'opération de matrice décodée.

13. Procédé selon la revendication 10, avant l'acquisition de ladite instruction d'opération de matrice, le procédé comprenant en outre :
la détermination si ladite instruction d'opération de matrice accède ou non à une même matrice qu'une instruction d'opération de matrice précédente : si ladite instruction d'opération de matrice accède à la même matrice que l'instruction d'opération de matrice précédente, ladite instruction d'opération de matrice est fournie à ladite unité d'opération de matrice après que l'exécution de l'instruction d'opération de matrice précédente est terminée ; si ladite instruction d'opération de matrice n'accède pas à la même matrice que l'instruction d'opération de matrice précédente, ladite instruction d'opération de matrice est directement fournie à ladite unité d'opération de matrice.

14. Procédé selon la revendication 13, dans lequel, lorsque ladite instruction d'opération de matrice accède à la même matrice que l'instruction d'opération de matrice précédente, le procédé comprend : le stockage de ladite instruction d'opération de matrice dans une file d'attente de stockage, et cette instruction d'opération de matrice dans la file d'attente de stockage est fournie à ladite unité d'opération de matrice après que l'exécution de l'instruction d'opération de matrice précédente est terminée.
